# EUROPEAN PATENT APPLICATION

(11) **EP 4 075 259 A1**
(43) Date of publication of application: **19.10.2022**
(21) Application number: 20905687.8
(22) Date of filing: 23.12.2020
(51) Int. Cl.: G06F 3/16

(54) **AUDIO OUTPUT METHOD AND APPARATUS, AND ELECTRONIC DEVICE AND STORAGE MEDIUM**

(30) Priority: 24.12.2019 CN 201911349069
(71) Applicant: RealMe Chongqing Mobile Telecommunications Corp., Ltd., Chongqing 401120 (CN)
(72) Inventor: WU, Hefeng, Chongqing 401120 (CN)
(74) Representative: Penza, Giancarlo
(86) International application number: PCT/CN2020/138666
(87) International publication number: WO 2021/129674

(57) **Abstract**

An audio output method and apparatus, and an electronic device and a storage medium, wherein same relate to the technical field of electronic devices. The method comprises: monitoring the current connection state of an electronic device and peripheral audio output devices (S110); when it is detected that the electronic device is connected to at least two peripheral audio output devices, respectively acquiring output audio type configured for each of the at least two peripheral audio output devices (S 120); when a piece of audio is to be outputted, acquiring an audio type of the audio (S 130); on the basis of the audio type of the audio and the output audio type correspondingly configured for each peripheral audio output device, determining a target peripheral audio output device from the at least two peripheral audio output devices (S140); and outputting the audio by means of the target peripheral audio output device (S150).

## Description

### CROSS-REFERENCE TO RELATED APPLICATION

The present disclosure claims priority of Chinese patent application No. CN201911349069.4 filed on December 24, 2019, the content of which is hereby incorporated herein by reference in its entirety for all purposes.

### TECHNICAL FIELD

The present disclosure relates to the technical field of electronic devices, and in particularly to an audio output method and apparatus, an electronic device and a storage medium.

### DESCRIPTION OF RELATED ART

With the development of science and technology, electronic devices are more and more widely used and have more and more functions, and become one of the necessities in people's daily life. Currently, the electronic devices can be connected to a peripheral audio output device, to perform audio output through the peripheral audio output device.

### SUMMARY

In view of the above problems, the present disclosure provides an audio output method and apparatus, an electronic device and a storage medium to solve the above problems.

In a first aspect, an embodiment of the present disclosure provides an audio output method, implemented by an electronic device, including: detecting a current connection state of the electronic device with peripheral audio output devices; acquiring, in response to the electronic device is detected as being connected to at least two peripheral audio output devices, an output audio type configured for each of the at least two peripheral audio output devices; acquiring an audio type of an audio, in response to the audio is to be outputted; determining, based on the audio type of the audio and the output audio type configured for each of the at least two peripheral audio output devices, a target peripheral audio output device from the at least two peripheral audio output devices; and outputting the audio through the target peripheral audio output device.

In a second aspect, an embodiment of the present disclosure provides an audio output apparatus, implemented by an electronic device, including: a connection state detection module, configured to detect a current connection state of the electronic device with peripheral audio output devices; an output audio type acquisition module, configured to acquire, in response to the electronic device is detected as being connected to at least two peripheral audio output devices, an output audio type configured for each of the at least two peripheral audio output devices; an audio type acquisition module, configured to acquire, in response to an audio is to be outputted, an audio type of the audio; a target peripheral audio output device determination module, configured to determine, based on the audio type of the audio and the output audio type configured for each of the at least two peripheral audio output devices, a target peripheral audio output device from the at least two peripheral audio output devices; and an audio output module, configured to output the audio through the target peripheral audio output device.

In a third aspect, an embodiment of the present disclosure provides an electronic device including a memory and a processor; the memory is coupled to the processor, the memory is stored with instructions, and the instructions are configured to cause, when being executed by the processor, the processor to implement the method described above.

In a fourth aspect, an embodiment of the present disclosure provides a computer-readable storage medium, the computer-readable storage medium has program codes stored therein, and the program codes are callable by a processor to implement the method described above.

### BRIEF DESCRIPTION OF DRAWINGS

In order to illustrate technical solutions in embodiments of the present disclosure more clearly, a brief introduction of accompanying drawings required to be used in the description of the embodiments is made hereinafter. It is apparent that the accompanying drawings in the following description are merely some embodiments of the present disclosure, and that other accompanying drawings may be obtained based on these drawings without any creative effort for those skilled in the art.
FIG. 1 illustrates a schematic diagram of an application environment in which an audio output method provided by an embodiment of the present disclosure may be used.
FIG. 2 illustrates a schematic flowchart of an audio output method provided by an embodiment of the present disclosure.
FIG. 3 illustrates a schematic flowchart of an audio output method provided by another embodiment of the present disclosure.
FIG. 4 illustrates a schematic flowchart of block S280 of the audio output method in FIG. 3 of the present disclosure.
FIG. 5 illustrates a schematic flowchart of an audio output method provided by still another embodiment of the present disclosure.
FIG. 6 illustrates a schematic flowchart of an audio output method provided by even still another embodiment of the present disclosure.
FIG. 7 illustrates a module block diagram of an audio output apparatus provided by an embodiment of the present disclosure.
FIG. 8 illustrates a block diagram of an electronic device of an embodiment of the present disclosure configured for implementing an audio output method according to an embodiment of the present disclosure.
FIG. 9 illustrates a storage unit of an embodiment of the present disclosure for storing or carrying program codes for implementing an audio output method according to an embodiment of the present disclosure.

### DETAILED DESCRIPTION OF EMBODIMENTS

For the purpose of a better understanding of the technical solutions in the embodiments of the present disclosure for those skilled in the art, the technical solutions in the embodiments of the present disclosure will be clearly and completely described hereinafter with reference to the accompanying drawings in the embodiments of the present disclosure.

As user's requirements for an electronic device become higher and higher, the electronic device tend to support playback of audio data, for example, playback of audio, playback of video, voice chat, video chat, etc., in order to meet the user's requirements as well as to provide convenience to the user. An audio architecture of the electronic device is similar to that of a computer, and is mainly achieved by a processor and a built-in audio codec. Specifically, after receiving inputted audio data, the processor converts the inputted audio data into an Inter-IC Sound (I2S) signal and transmits the I2S signal to the built-in audio codec for conversion into an analogue signal, which is then played back.

Further, the electronic device may be connected to a peripheral audio output device to output audio data through the peripheral audio output device. Specifically, the peripheral audio output device may receive the audio data transmitted from the electronic device and play the audio data. The peripheral audio output device may include a headphone, a speaker, and an On-board device, etc. Specifically, the electronic device and the peripheral audio output device may transmit data through a Wireless Fidelity (WIFI^{®}) connection, the electronic device and the peripheral audio output device may transmit data through a BLUETOOTH^{®} (BT) connection, and the electronic device and the peripheral audio output device may transmit data through a wired connection, etc.

Further, the electronic device may be connected to multiple peripheral audio output devices simultaneously. For example, the electronic device may be connected to a headphone via a BLUETOOTH^{®} while being connected to a sound equipment via a wired connection. For another example, the electronic device may be connected to both the headphone and the sound equipment via the BLUETOOTH^{®}, or may be connected to both a first headphone and a second headphone via the BLUETOOTH^{®}, etc. However, an inventor of the present disclosure has found that, when the electronic device is connected to multiple peripheral audio output devices simultaneously, an audio from the electronic device can only be outputted from one of the multiple peripheral audio output devices and an output logic of the audio is static. For example, when the electronic device is connected to the headset via the BLUETOOTH^{®} while being connected to the audio via the wired connection, the electronic device may only output the audio through the headset, thereby resulting in a poor user experience.

With respect to the above problems, through a long research and discovery, the inventor has proposed an audio output method, an audio output apparatus, an electronic device, and a storage medium according to embodiments of the present disclosure. Flexibility of audio output is improved through acquiring an output audio type configured for each of at least two peripheral audio output devices when the electronic device is connected to the at least two peripheral audio output devices, and outputting different types of audios through different peripheral audio output devices. The specific audio output method is described in detail in subsequent embodiments.

An application environment, in which the audio output method provided by an embodiment of the present disclosure may be used, will be described hereinafter.

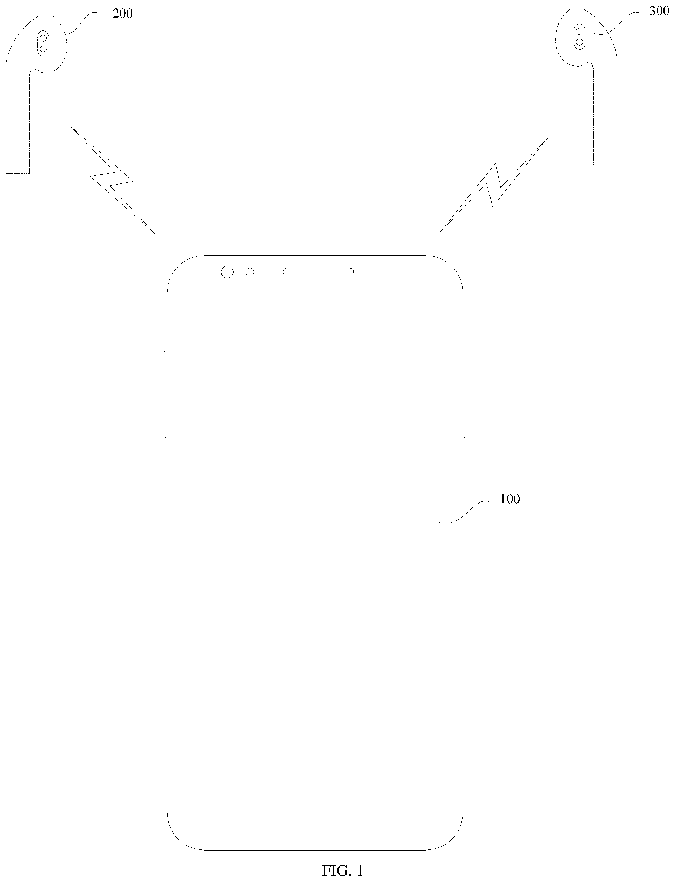

Referring to FIG. 1, FIG. 1 illustrates a schematic diagram of the application environment in which the audio output method provided by the embodiment of the present disclosure. The application environment includes an electronic device 100, a first peripheral audio output device 200, and a second peripheral audio output device 300. The electronic device 100 is connected to the first peripheral audio output device 200 and the second peripheral audio output device 300 individually, to enable an audio from the electronic device 100 to be outputted through the first peripheral audio output device 200 or the second peripheral audio output device 300. Also, the electronic device 100 may further be connected to other more peripheral audio output devices. For example, the electronic device 100 may further be connected to a third peripheral audio output device, a fourth peripheral audio output device through an N-th peripheral audio output device, etc., which is not limited herein.

Specifically, the electronic device 100 generally has a BLUETOOTH^{®} module. The BLUETOOTH^{®} module may refer to a collection of chip-based circuits with an integrated BLUETOOTH^{®} functionality, and is used for wireless network communication. Further, the electronic device 100 may establish a BLUETOOTH^{®} connection with the first peripheral audio output device 200 through the BLUETOOTH^{®} module. In addition, the electronic device 100 is generally provided with a data interface. The data interface is used to realize a connection between the electronic device 100 and the peripheral device, thus the electronic device can establish a wired connection with the second peripheral audio output device 300 through the data interface. Moreover, the electronic device 100 may also be connected to the first peripheral audio output device 200 and the second peripheral audio output device 300 through other more ways, which is not limited herein.

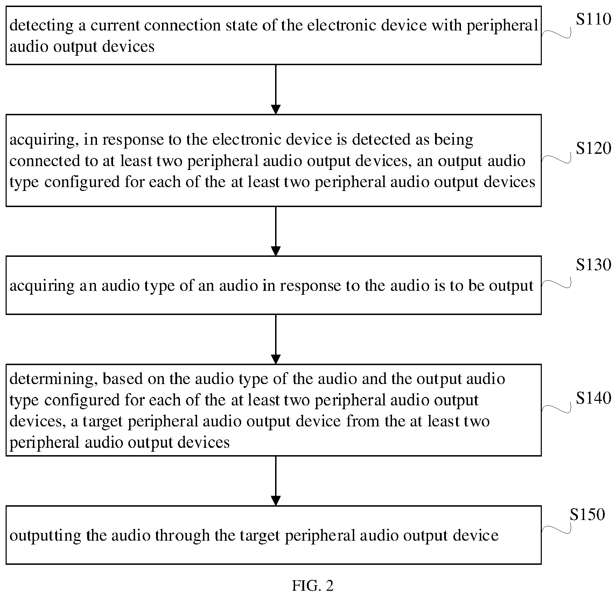

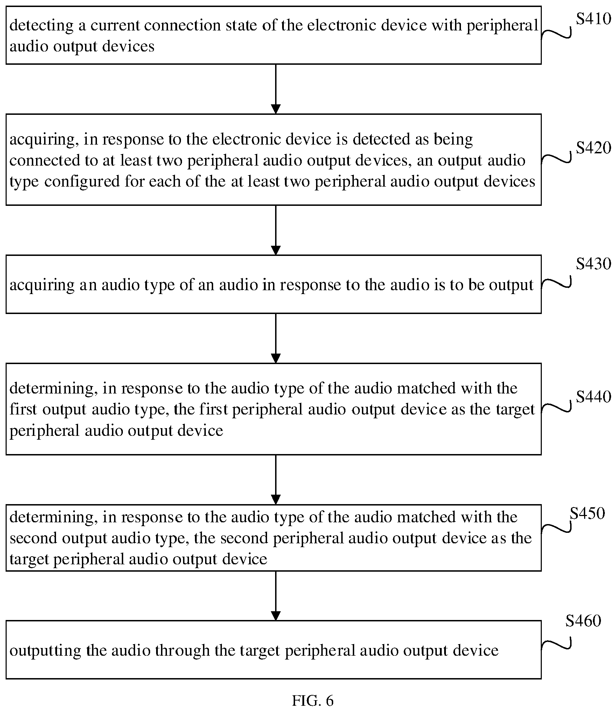

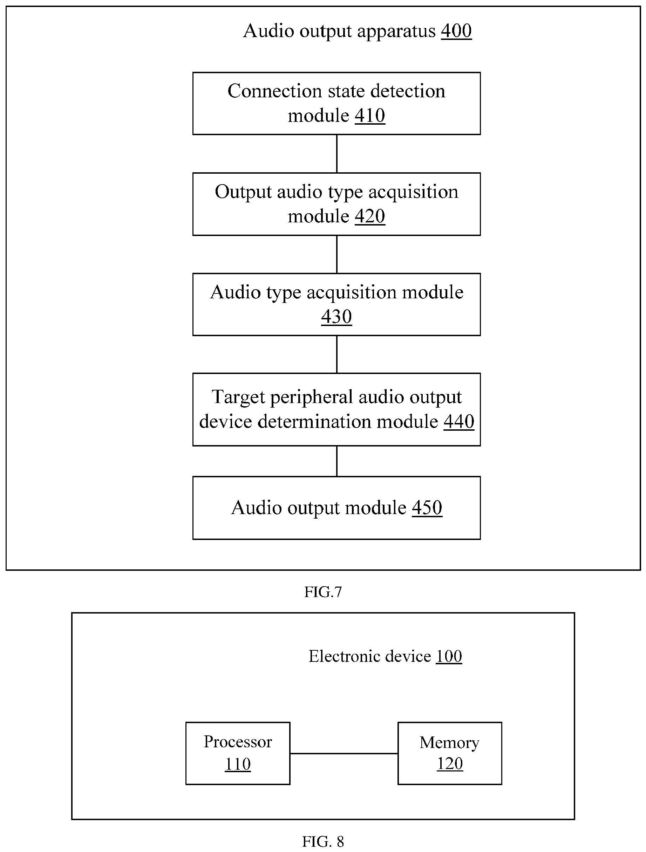

Referring to FIG. 2, FIG. 2 illustrates a schematic flowchart of an audio output method provided by an embodiment of the present disclosure. With the audio output method, flexibility of audio output is improved through acquiring an output audio type configured for each of at least two peripheral audio output devices when the electronic device is connected to the at least two peripheral audio output devices, and outputting different types of audios through different peripheral audio output devices. In a specific embodiment, the audio output method may be implemented by an audio output apparatus 400 as shown in FIG. 6 and an electronic device 100 configured with the audio output apparatus 400 (as shown in FIG. 7). A specific flowchart of the audio output method of the embodiment by taking an electronic device as an example will be described hereinafter. Further, it should be understood that the electronic device to which the audio output method of the embodiment is applied may be a desktop computer, a tablet computer, a smartphone, or a wearable electronic device, etc., which is not limited herein. The flowchart shown in FIG. 2 will be described in detail hereinafter, and the audio output method may specifically begin from block S110 to block S150.

In block S110, a current connection state of the electronic device with peripheral audio output devices is detected.

The current connection state of the electronic device with the peripheral audio output devices may be detected through some manners. Specifically, the current connection state of the electronic device with the peripheral audio output devices may be detected in real time; the current connection state of the electronic device with the peripheral audio output devices may be detected at intervals of a preset duration; the current connection state of the electronic device with the peripheral audio output devices may be detected at a preset time; or the current connection state of the electronic device with the peripheral audio output devices may be detected in a manner set by a user, etc., which is not limited herein.

Specifically, the connection state of the electronic device with the peripheral audio output devices may include a state of being connected and a state of being not connected, and the state of being not connected includes a non-connected state and a trying-to-connect state. For example, whether the electronic device and the peripheral audio output device are in the state of being connected may be determined by checking a state value of the electronic device. Specifically, in response to the electronic device is connected to the peripheral audio output device, a first state value is returned; and in response to the electronic device is disconnected from the peripheral audio output device, a second state value is returned, thus it is possible to determine whether the electronic device is connected to the peripheral audio output device by detecting the first state value and the second state value. For another example, an android system sends a broadcast when the peripheral audio output device is connected or disconnected, so the electronic device can determine whether the electronic device is in the state of being connected with the peripheral audio output device by listening to the broadcast.

In some embodiments, in response to the electronic device is detected as being in the state of being connected with the peripheral audio output device, the number of peripheral audio output device in the state being connected with the electronic device may further be detected. For example, the number of peripheral audio output device in the state of being connected with the electronic device can be determined by looking up a state value of the electronic device. Specifically, a third state value is returned in response to the electronic device is connected to one peripheral audio output device, a fourth state value is returned in response to the electronic device is connected to two peripheral audio output devices, and so on. As such, the number of peripheral audio output device in the state being connected with the electronic device can be detected by detecting the third state value, the fourth state value, and so on.

In block S120, in response to the electronic device is detected as being connected to at least two peripheral audio output devices, an output audio type configured for each of the at least two peripheral audio output devices is acquired.

In some embodiments, when the detection result indicates that the electronic device is not connected to the peripheral audio output device, an audio is outputted through a device built into the electronic device. For example, when the detection result indicates that the electronic device is not connected to the peripheral audio output device, the audio may be outputted through an earpiece or a speaker built into the electronic device.

In some embodiments, when the detection result indicates that the electronic device is connected to one peripheral audio output device, an audio is outputted through this peripheral audio output device connected to the electronic device. Specifically, the electronic device may be connected to this peripheral audio output device through a WIFI^{®}; the electronic device may be connected to this peripheral audio output device through a wired connection; the electronic device may be connected to this peripheral audio output device through a BLUETOOTH^{®}; or the electronic device may be connected to this peripheral audio output device through a ZigBee^{®}, etc., which is not limited herein. For example, when the detection result indicates that the electronic device is connected to a headset through the WIFI^{®}, the BLUETOOTH^{®}, the wired connection, or the ZigBee^{®}, the audio may be outputted through the headset connected to the electronic device.

In some embodiments, when the detection result indicates that the electronic device is connected to at least two peripheral audio output devices, an output audio type configured for each of the at least two peripheral audio output devices may be acquired. For example, in a case that the electronic device is connected to two peripheral audio output devices, and the two peripheral audio output devices include a first peripheral audio output device and a second peripheral audio output device, when the detection result indicates that the electronic device is connected to the first peripheral audio output device and the second peripheral audio output device, an output audio type correspondingly configured for the first peripheral audio output device and an output audio type correspondingly configured for the second peripheral audio output device can be acquired respectively. The output audio type corresponding to the configuration of the second peripheral audio output device is acquired. For example, the electronic device can be connected to both the first peripheral audio output device and the second peripheral audio output device through a same manner. For example, the electronic device can be connected to both the first peripheral audio output device and the second peripheral audio output device through a WIFI^{®}; the electronic device can be connected to both the first peripheral audio output device and the second peripheral audio output device through a wired connection; the electronic device may be connected to both the first peripheral audio output device and the second peripheral audio output device through a BLUETOOTH^{®}; or the electronic device may be connected to both the first peripheral audio output device and the second peripheral audio output device through a ZigBee^{®}, etc., which is not limited herein. For another example, the electronic device can be connected simultaneously to both the first peripheral audio output device and the second peripheral audio output device through different manners. For example, the electronic device may be connected to the first peripheral audio output device through a WIFI^{®} and connected to the second peripheral audio output device through a BLUETOOTH^{®}; the electronic device may be connected to the first peripheral audio output device through a BLUETOOTH^{®} and connected to the second peripheral audio output device through a wired connection; the electronic device may be connected to the first peripheral audio output device through a WIFI^{®} and connected to the second peripheral audio output device through a BLUETOOTH^{®}; the electronic device may be connected to the first peripheral audio output device through a BLUETOOTH^{®} and connected to the second peripheral audio output device through a wired connection; or the electronic device may be connected to the first peripheral audio output device through a wired connection and connected to the second peripheral audio output device through a ZigBee^{®}, etc. which is not limited herein.

Specifically, the output audio type may be selected from a media audio type and a call audio type. An audio of the media audio type may include an audio outputted by a music playback software, an audio outputted by a video playback software, an audio outputted by a search software, etc. An audio of the call audio type may include an audio outputted by a call (telephony) software, an audio outputted by a social software during voice or video, etc.

In some embodiments, in response to the electronic device is detected as being connected to the at least two peripheral audio output devices, attribute information of each of the at least two peripheral audio output devices may be acquired, and an output audio type correspondingly configured for each peripheral audio output device may be determined based on the attribute information of each peripheral audio output device. For example, if the at least two peripheral audio output devices include a headphone and a sound equipment, attribute information of the headphone and attribute information of the sound equipment may be acquired respectively, and an output audio type correspondingly configured for the headphone may be acquired based on the attribute information of the headphone, and an output audio type correspondingly configured for the sound equipment may be acquired based on the attribute information of the sound equipment. For example, if the attribute information of the headphone is a propagation range of sound reduction and the attribute information of the sound equipment is a propagation range of sound amplification, the output audio type correspondingly configured for the headphone is acquired to be the call audio type based on a feature of reducing sound propagation range of the headphone, and the output audio type correspondingly configured for the sound equipment is acquired to be the media audio type based on a feature of expanding sound propagation range of the sound equipment.

In some embodiments, in response to the electronic device is detected as being connected to at least two peripheral audio output devices, a network quality of an environment in which the electronic device is located and a connection manner of the electronic device with each of the at least two peripheral audio output devices may be acquired, and the output audio type correspondingly configured for each of the at least two peripheral audio output devices are determined based on the network quality of the environment in which the electronic device is located and the connection manner of the electronic device with each of the at least two peripheral audio output devices. For example, if the at least two peripheral audio output devices include a first peripheral audio output device and a second peripheral audio output device, and the electronic device is connected to the first peripheral audio output device through a wired connection and the electronic device is connected to the second peripheral audio output device through a BLUETOOTH^{®} connection, the output audio type of the first peripheral audio output device in the wired connection to the electronic device and the output audio type of the second peripheral audio output device in the BLUETOOTH^{®} connection to the electronic device are acquired based on the network quality of the environment in which the electronic device is located. If the network quality of the environment in which the electronic device is located is good, the output audio type of the first peripheral audio output device may be determined to be the media audio type and the output audio type of the second peripheral audio output device may be determined to be the call audio type; or the output audio type of the first peripheral audio output device may be determined to be the call audio type and the output audio type of the second peripheral audio output device may be determined to be the media audio type. If the network quality of the environment in which the electronic device is located is poor, it may be determined that the output audio type of the first peripheral audio output device is the media audio type and the call audio type, and the output audio type of the second peripheral audio output device is empty.

In some embodiments, when the detection result indicates that the electronic device is connected to at least two peripheral audio output devices, a function configuration interface being used to configure output audio types corresponding to the at least two peripheral audio output devices is displayed, a configuration operation on the function configuration interface is acquired, and an output audio type configured for each of the at least two peripheral audio output devices is acquired based on the configuration operation.

In some embodiments, when the detection result indicates that the electronic device is connected to at least two peripheral audio output devices, a pre-configured correspondence between peripheral audio output devices and output audio types is acquired locally from the electronic device, and the output audio type configured for each of the at least two peripheral audio output devices is acquired respectively based on the correspondence.

In block S130, in response to an audio is to be output, an audio type of the audio is acquired.

In the embodiment, an audio type of an audio to be outputted of the electronic device may be acquired when the audio to be outputted exists in the electronic device. In some embodiments, it can be determined that an audio to be outputted exists in the electronic device when an outgoing call is dialed by the electronic device, an incoming call is received by the electronic device, or a media audio is played, and an audio type of the audio to be outputted can be thus acquired. Specifically, the electronic device may listen to the incoming call or outgoing call in real time through a listening module built in the electronic device. When the electronic device is in a ringing state (CALL_STATE_RINGING) during a starting operation of the incoming call or the outgoing call, it can be determined that an audio to be outputted exists in the electronic device. Optionally, a system broadcast may be sent when the outgoing call is dialed, and the system broadcast may be listened using a BroadcastReceiver. Specifically, the electronic device may detect an operation on a media audio playback typed software, and may determine that an audio to be outputted exists in the electronic device when a voice command or a touch operation for instructing the media audio playback typed software to perform audio playback is detected. Specifically, the media audio playback type software may include, but is not limited to, an audio playback typed software, a video playback typed software, and a search typed software.

In some embodiments, an audio type of the audio may include a media audio type and a call audio type. As such, in the embodiment, the electronic device may determine whether the audio type of the audio is a media audio type or a call audio type in response to it is determined that the audio to be outputted exists. For example, an audio source of the audio to be outputted from the electronic device can be analyzed, when the analysis result indicates that the audio source of the audio to be outputted is a video call or a voice call from a call software or a social software, the audio type of the audio to be outputted can be determined as the call audio type, and when the analysis result indicates that the audio source of the audio to be outputted is a media audio playback typed software (such as an audio playback typed software, a video playback typed software, and the like), the audio type of the audio to be outputted can be determined as the media audio type.

In block S140, a target peripheral audio output device is determined from the at least two peripheral audio output devices based on the audio type of the audio and the output audio type configured for each of the at least two peripheral audio output devices.

In some embodiments, the audio type of the audio to be outputted is a call audio type or a media audio type, and the output audio type correspondingly configured for each peripheral audio output devices is a call audio type or a media audio type, so that a peripheral audio output device matching the audio type of the audio can be determined as a target peripheral audio output device from the at least two peripheral audio output devices based on the audio type of the audio and the output audio type configured for each of each of the at least two peripheral audio output devices.

In some embodiments, it is assumed that the at least two peripheral audio output devices include a first peripheral audio output device and a second peripheral audio output device, and that an audio output type correspondingly configured for the first peripheral audio output device is a call audio type and an audio output type correspondingly configured for the second peripheral audio output device is a media audio type. Then, after the audio type of the audio to be outputted is acquired, whether the audio type of the audio to be outputted is a call audio type or a media audio type can be determined. When the determination result indicates that the audio type of the audio to be outputted is a call audio type, the first peripheral audio output device can be determined as a target peripheral audio output device; and when the determination result indicates that the audio type of the audio to be outputted is a media audio type, the second peripheral audio output device can be determined as a target peripheral audio output device.

For example, it is assumed that the first peripheral audio output device is a wired headset, the second peripheral audio output device is a BLUETOOTH^{®} headset, an audio output type correspondingly configured for the wired headset is a call audio type, and an audio output type configured correspondingly configured for the BLUETOOTH^{®} headset is a media audio type. Then, after the audio type of the audio to be outputted is acquired, whether the audio type of the audio to be outputted is a call audio type or a media audio type can be determined. When the determination result indicates that the audio type of the audio to be outputted is a call audio type, the wired headset can be determined as a target peripheral audio output device; and when the determination result indicates that the audio type of the audio to be outputted is a media audio type, the BLUETOOTH^{®} headset can be determined as a target peripheral audio output device.

In block S150, the audio is outputted through the target peripheral audio output device.

In some embodiments, after a target peripheral audio output device is determined, the audio may be outputted through the target peripheral audio output device. For example, the audio may be outputted through the wired headset when the wired headset is determined as the target peripheral audio output device; or, the audio may be outputted through the BLUETOOTH^{®} headset when the BLUETOOTH^{®} headset is determined as the target peripheral audio output device.

The audio output method provided according to an embodiment of the present disclosure includes: detecting a current connection state of the electronic device with peripheral audio output devices; when detecting that the electronic device is connected to at least two peripheral audio output devices, acquiring an output audio type configured for each of the at least two peripheral audio output devices; when an audio is to be output, acquiring an audio type of the audio; determining a target peripheral audio output device from the at least two peripheral audio output devices based on the audio type of the audio and the output audio type configured for each of the at least two peripheral audio output devices; and outputting the audio through the target peripheral audio output device. As such, the output audio type correspondingly configured for each peripheral audio output device is acquired when the electronic device is connected to the at least two peripheral audio output devices, and different types of audios are outputted through different peripheral audio output devices correspondingly, thereby improving flexibility of audio output.

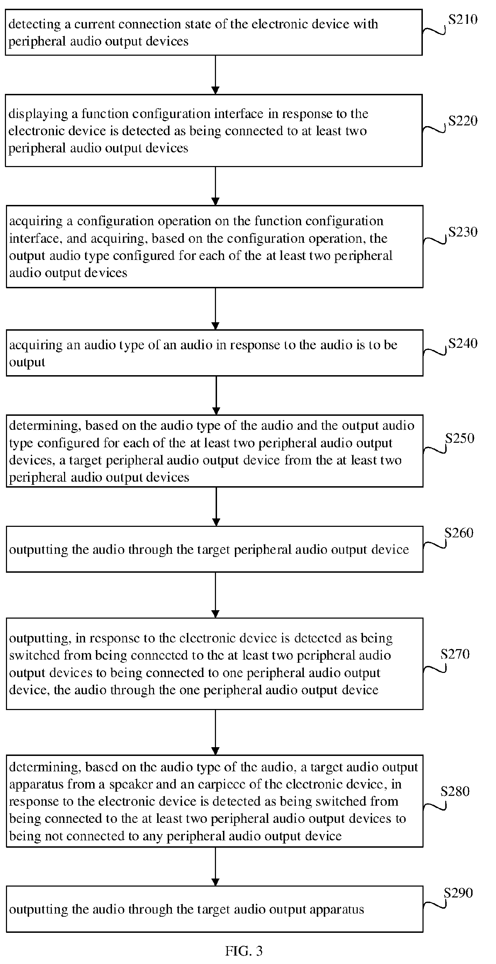

Referring to FIG. 3, FIG. 3 illustrates a schematic flowchart of an audio output method provided by another embodiment of the present disclosure. The method may be implemented by the electronic device described above, and will be described in detail hereinafter with respect to a flowchart shown in FIG. 3. The audio output method may specifically begin from block S210 to block S290.

In block S210, a current connection state of the electronic device with peripheral audio output devices is detected.

Specifically, a specific detail of block S210 may refer to the above description of block S110, which will not be repeated herein.

In block S220, in response to the electronic device is detected as being connected to at least two peripheral audio output devices, a function configuration interface is displayed, and the function configuration interface is used to configure the output audio types corresponding to the at least two peripheral audio output devices.

In the embodiment, when the detection result indicates that the electronic device is connected to the at least two peripheral audio output devices, the function configuration interface used to configure output audio types corresponding to the at least two peripheral audio output devices respectively may be displayed. In some embodiments, in response to the electronic device is detected as being connected to the at least two peripheral audio output devices, if the electronic device is in a screen-off state, a screen of the electronic device may be lightened, and the function configuration interface is displayed in a pop-up window; or, if the electronic device is in a screen-on state, the function configuration interface is displayed in a hover pop-up window on a current display interface of the electronic device, or the function configuration interface is displayed as covering the current display interface, which is not limited herein.

In some embodiments, the function configuration interface is displayed whenever the electronic device is detected as being connected to at least two peripheral audio output devices.

In block S230, a configuration operation on the function configuration interface is acquired, and the output audio type configured for each of the at least two peripheral audio output devices is acquired based on the configuration operation.

In some embodiment, after displaying the function configuration interface, the electronic device may detect and acquire the configuration operation on the function configuration interface, and acquire the output audio type configured for each of the at least two peripheral audio output devices based on the acquired configuration operation.

In some embodiments, the functional configuration interface may display the at least two peripheral audio output devices and output audio type selection controls at a corresponding position of each peripheral audio output device. Specifically, each of the output audio type selection controls may be used to select the output audio type of a corresponding one of the at least two peripheral audio output devices based on a selection operation. For example, the output audio type selection control may be used to select an output audio type of the corresponding peripheral audio output device as a call audio type or a media audio type. Specifically, when the selection operation indicates that a call audio type is selected as the output audio type of the corresponding peripheral audio output device, the output audio type of the corresponding configuration of the peripheral audio output device can be determined as the call audio type based on the selection operation, and so on. Therefore, the output audio type configured for each of the at least two peripheral audio output devices can be acquired respectively.

In some implementations, the functional configuration interface may display the at least two peripheral audio output devices and output audio type input boxes at corresponding locations of each peripheral audio output device. Specifically, each of the output audio type input boxes may be used to determine an output audio type of a corresponding peripheral audio output device based on an input content. For example, the output audio type input box may be used to determine whether the output audio type of the corresponding peripheral audio output device is a call audio type or a media audio type. Specifically, when the input content indicates that a call audio type is selected as the output audio type of the corresponding peripheral audio output device, the output audio type correspondingly configured for the corresponding peripheral audio output device can be determined as the call audio type based on the input content corresponding to an input operation, and so on. Therefore, the output audio type configured for each of the at least two peripheral audio output devices can be acquired respectively.

In block S240, when an audio is to be outputted, an audio type of the audio is acquired.

In block S250, a target peripheral audio output device is determined from the at least two peripheral audio output devices based on the audio type of the audio and the output audio type configured for each of the at least two peripheral audio output devices.

In block S260, the audio is outputted through the target peripheral audio output device.

Specifically, specific details of block S240 to block S260 may refer to the above descriptions of block S130 to block S150, which will not be repeated herein.

In block S270, in response to the electronic device is detected as being switched from being connected to the at least two peripheral audio output devices to being connected to one peripheral audio output device of the at least two peripheral audio output devices, the audio is outputted through the one peripheral audio output device.

In some embodiments, during outputting an audio of the electronic device through the target peripheral audio output device, the electronic device may detect a change of the connection state of the electronic device with the at least two peripheral audio output devices. Specifically, in response to the connection state of the electronic device with the at least two peripheral audio output devices is detected as being switched from being connected to the at least two peripheral audio output devices to being connected to one peripheral audio output device of the at least two peripheral audio output devices, the audio is outputted through the one peripheral audio output device connected to the electronic device. That is to say, the audio is outputted through the one peripheral audio output device connected to the electronic device regardless of whether the audio type of the audio is a call audio type or a media audio type.

For example, it is assumed that, the electronic device is connected to the first peripheral audio output device and the second peripheral audio output device, the output audio type correspondingly configured for the first peripheral audio output device is a call audio type, and the output audio type correspondingly configured for the second peripheral audio output device is a media audio type. When the audio type of the audio to be outputted is the call audio type, the audio is outputted through the first peripheral audio output device. Then, in the process of outputting the audio through the first peripheral audio output device, whether the connection states of the electronic device with the first peripheral audio output device and the second peripheral audio output device are changed can be detected. Specifically, in response to the electronic device is detected as being disconnected from the first peripheral audio output device and is remain connected to the second peripheral audio output device, the audio is outputted through the second peripheral audio output device. In response to the electronic device is detected as being disconnected from the second peripheral audio output device and is remain connected to the first peripheral audio output devices, the audio is outputted through the first audio output apparatus.

In block S280, in response to the electronic device is detected as being switched from being connected to the at least two peripheral audio output devices to being not connected to any peripheral audio output device, a target audio output apparatus is determined from a speaker and an earpiece of the electronic device according the audio type of the audio.

In the embodiment, the speaker and the earpiece are built in the electronic device, and both the speaker and the earpiece can be used to output an audio.

In some embodiments, during outputting an audio of the electronic device through the target peripheral audio output device, the electronic device may detect a change of the connection state of the electronic device with the peripheral audio output devices. Specifically, in response to the connection state of the electronic device with the at least two peripheral audio output devices is detected as being switched from being connected to the at least two peripheral audio output devices to being not connected to any peripheral audio output device, one of the speaker and the earpiece may be determined as the target audio output apparatus based on the audio type of the audio currently to be outputted. That is to say, in response to the electronic device is detected as being switched from being connected to the at least two peripheral audio output devices to being not connected to any peripheral audio output device, the audio type of the audio currently to be outputted may be acquired, and then based on the audio type of the audio currently to be outputted, the speaker of the electronic device may be determined as the target audio output apparatus, or the earpiece of the electronic device may be determined as the target audio output apparatus.

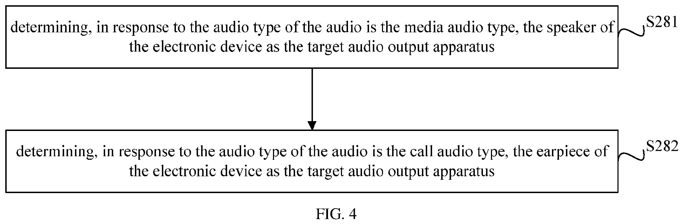

Referring to FIG. 4, FIG. 4 illustrates a schematic flowchart of block S280 of the audio output method shown in FIG. 3 of the present disclosure. The block S280 will be described in detail hereinafter with respect to the flowchart shown in FIG. 4, and the method may specifically begin from block S281 to block S282.

In block S281, in response to the audio type of the audio is the media audio type, the speaker of the electronic device is determined as the target audio output apparatus.

In some embodiments, the audio type of the audio to be outputted may include a media audio type and a call audio type. Specifically, in response to the electronic device is not connected to any peripheral audio output device, the electronic device may by default output an audio of the media audio type through the speaker and an audio of the call audio type through the earpiece. Thus, in the embodiment, in response to the electronic device is switched from being connected to the at least two peripheral audio output devices to being not connected to any peripheral audio output device, the speaker of the electronic device may be determined as the target audio output apparatus in response to the audio type of the audio currently to be outputted is the media audio type, and the earpiece of the electronic device may be determined as the target audio output apparatus in response to the audio type of the audio currently to be outputted is the call audio type.

In block S282, in response to the audio type of the audio is the call audio type, the earpiece of the electronic device is determined as the target audio output apparatus.

In block S290, the audio is outputted through the target audio output apparatus.

In some embodiments, after the target audio output apparatus is determined, the audio may be outputted through the target audio output apparatus. For example, the audio may be outputted through the speaker if the speaker is determined as the target audio output apparatus, or the audio may be outputted through the earpiece if the earpiece is determined as the target audio output apparatus.

A further embodiment of the present disclosure provides an audio output method, in which, a current connection state of an electronic device with peripheral audio output devices is detected; in response to the electronic device is detected as being connected to at least two peripheral audio output devices, a function configuration interface is displayed, and the function configuration interface is used to configure output audio types corresponding to the at least two peripheral audio output devices; and a configuration operation on the function configuration interface is acquired, and the output audio type configured for each of the at least two peripheral audio output devices is acquired based on the configuration operation. In response to an audio is to be outputted, an audio type of the audio is acquired; a target peripheral audio output device is determined from the at least two peripheral audio output devices based on the audio type of the audio and the output audio type configured for each of the at least two peripheral audio output devices; and the audio is outputted through the target peripheral audio output device. In response to the electronic device is detected as being switched from being connected to the at least two peripheral audio output devices to being connected to one peripheral audio output device of the at least two peripheral audio output devices through the one peripheral audio output device. In response to the electronic device is detected as being switched from being connected to the at least two peripheral audio output devices to being not connected to any peripheral audio output device, a target audio output apparatus from a speaker and an earpiece of the electronic device according the audio type of the audio; and the audio is outputted through the target audio output apparatus. Compared to the audio output method shown in FIG. 2, in the present embodiment, the function configuration interface is entered to configure the output audio types corresponding to the at least two peripheral audio output devices in response to the electronic device is connected to the at least two peripheral audio output devices, thereby improving flexibility. In addition, in the present embodiment, the audio can be outputted through a different apparatus in response to the electronic device is switched from being connected to the at least two peripheral audio output devices to being connected to one peripheral audio output device or being not connected to any peripheral audio output device, thereby improving adaptability of the electronic device.

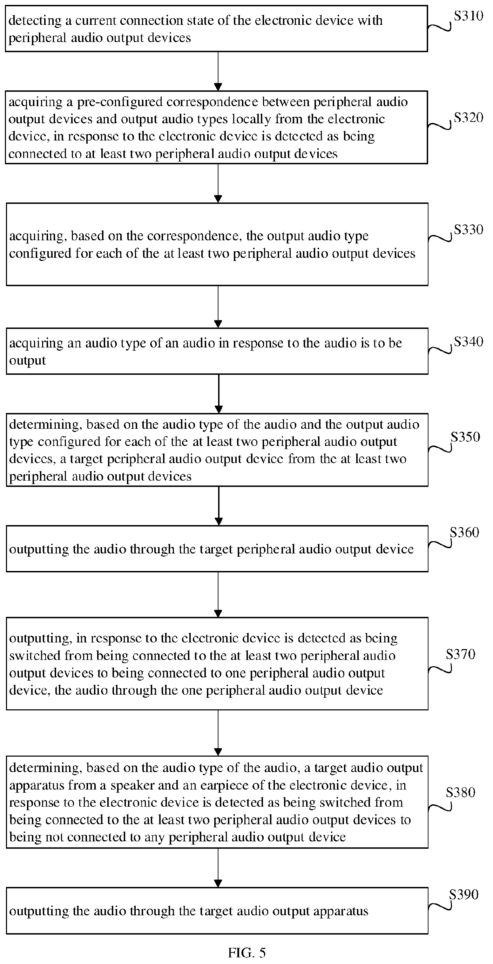

Referring to FIG. 5, FIG. 5 illustrates a schematic flowchart of an audio output method provided based on still another embodiment of the present disclosure. This audio output method is implemented by the electronic device described above, and will be described in detail hereinafter with respect to the flowchart shown in FIG. 5. The audio output method may specifically begin from block S310 to block S390.

In block S310, a current connection state of the electronic device with peripheral audio output devices is detected.

Specifically, a specific detail of block S310 may refer to the above description of block S110, which will not be repeated herein.

In block S320, in response to the electronic device is detected as being connected to at least two peripheral audio output devices, a pre-configured correspondence between peripheral audio output device and output audio types is acquired locally from the electronic device.

In the embodiment, in response to the detection result indicates that the electronic device is connected to at least two peripheral audio output devices, a pre-configured correspondence between peripheral audio output devices and output audio types may be acquired locally from the electronic device. In some embodiments, in response to the electronic device is detected as being connected to the at least two peripheral audio output devices for the first time, a function configuration interface for configuring output audio types corresponding to the at least two peripheral audio output devices may be displayed, and a configuration operation on the functional configuration interface may be acquired, and the output audio type configured for each of the at least two peripheral audio output devices may be acquired based on the configuration operation, respectively. After the output audio type configured for each of each of the at least two peripheral audio output devices is acquired, the correspondence between the peripheral audio output devices and the output audio types can be established (as shown in Table 1), and the correspondence is stored locally in the electronic device. As such, whenever the electronic device is detected as being connected to the at least two peripheral audio output devices later, the output audio type correspondingly configured for the connected peripheral audio output device can be determined based on the correspondence stored in the electronic device, thereby improving a speed of acquiring the output audio type correspondingly configured for the connected peripheral audio output device.

**Table 1**

| Peripheral audio output device | Output audio type |
|---|---|
| First peripheral audio output device | First output audio type |
| Second peripheral audio output device | Second output audio type |
| Third peripheral audio output device | Third output audio type |

In block S330, the output audio type configured for each of the at least two peripheral audio output devices is acquired based on the pre-configured correspondence.

In some embodiments, after the correspondence between the peripheral audio output devices and the output audio types is acquired, the output audio type configured for each of the at least two peripheral audio output devices to which the electronic device is connected may be acquired respectively. For example, in response to the electronic device is connected to a first peripheral audio output device and a second peripheral audio output device, respectively, an output audio type correspondingly configured for the first peripheral audio output device may be determined as a first output audio type based on the correspondence, and an output audio type correspondingly configured for the second peripheral audio output device may be determined as a second output audio type.

In block S340, in response to an audio is to be output, an audio type of the audio is acquired.

In block S350, a target peripheral audio output device is determined from the at least two peripheral audio output devices based on the audio type of the audio and the output audio type configured for each of each of the at least two peripheral audio output devices.

In block S360, the audio is outputted through the target peripheral audio output device.

Specifically, specific details of block S340 to block S360 may refer to the above descriptions of block S130 to block S150, which will not be repeated herein.

In block S370, in response to the electronic device is detected as being switched from being connected to the at least two peripheral audio output devices to being connected to one peripheral audio output device of the at least two peripheral audio output devices, the audio is outputted through the one peripheral audio output device.

In block S380, in response to the electronic device is detected as being switched from being connected to the at least two peripheral audio output devices to being not connected to any peripheral audio output device, a target audio output apparatus is determined from a speaker and an earpiece of the electronic device according the audio type of the audio.

In block S290, the audio is outputted through the target audio output apparatus.

Specifically, specific details of block S370 to block S390 may refer to the above descriptions of block S270 to block S290, which will not be repeated herein.

A still further embodiment of the present disclosure provides an audio output method, in which, a current connection state of the electronic device with peripheral audio output devices is detected; in response to the electronic device is detected as being connected to at least two peripheral audio output devices, a pre-configured correspondence between peripheral audio output device and output audio types is acquired locally from the electronic device; and the output audio type configured for each of the at least two peripheral audio output devices is acquired based on the pre-configured correspondence. In response to an audio is to be output, an audio type of the audio is acquired; a target peripheral audio output device is determined from the at least two peripheral audio output devices based on the audio type of the audio and the output audio type configured for each of each of the at least two peripheral audio output devices; and the audio is outputted through the target peripheral audio output device. In response to the electronic device is detected as being switched from being connected to the at least two peripheral audio output devices to being connected to one peripheral audio output device of the at least two peripheral audio output devices, the audio is outputted through the one peripheral audio output device. In response to the electronic device is detected as being switched from being connected to the at least two peripheral audio output devices to being not connected to any peripheral audio output device, a target audio output apparatus is determined from a speaker and an earpiece of the electronic device according the audio type of the audio; and the audio is outputted through the target audio output apparatus. Compared to the audio output method shown in FIG. 2, in this embodiment, the pre-configured correspondence between the peripheral audio output devices and the output audio types is acquired locally from the electronic device in response to the electronic device is connected to the at least two peripheral audio output devices to acquire the output audio types corresponding to the at least two peripheral audio output devices, thereby improving an acquisition speed of the output audio types corresponding to the at least two peripheral audio output devices. In addition, in this embodiment, the audio can be outputted through a different apparatus in response to the electronic device is switched from being connected to the at least two peripheral audio output devices to being connected to one peripheral audio output device or being not connected to a peripheral audio output device, thereby improving adaptability of the electronic device.

Referring to FIG. 6, FIG. 6 illustrates a schematic flowchart of an audio output method provided based on even still another embodiment of the present disclosure. This audio output method is implemented by the electronic device described above, and will be described in detail hereinafter with respect to the flowchart shown in FIG. 6. Specifically, in this embodiment, the at least two peripheral audio output devices include a first peripheral audio output device and a second peripheral audio output device, the first peripheral audio output device is correspondingly configured with a first output audio type, the second peripheral audio output device is correspondingly configured with a second output audio type, and the audio output method may specifically begin from block S410 to block S460.

In block S410, a current connection state of the electronic device with peripheral audio output devices is detected.

In block S420, in response to the electronic device is detected as being connected to at least two peripheral audio output devices, an output audio type configured for each of the at least two peripheral audio output devices is acquired.

In block S430, in response to an audio is to be output, an audio type of the audio is acquired.

Specifically, specific details of block S410 to block S430 may refer to the above descriptions of block S110 to block S130, which will not be repeated herein.

In block S440, in response to the audio type of the audio matched with the first output audio type, the first peripheral audio output device is determined as a target peripheral audio output device.

In some embodiments, the at least two peripheral audio output devices connected to the electronic device include a first peripheral audio output device and a second peripheral audio output device. The first peripheral audio output device is correspondingly configured with a first output audio type, and the second peripheral audio output device is correspondingly configured with a second output audio type. Specifically, the first peripheral audio output device may include a wired peripheral audio output device, such as a wired headset, and the second peripheral audio output device may include a BLUETOOTH^{®} peripheral audio output device, such as a BLUETOOTH^{®} headset.

In some embodiments, when the audio type of the audio to be outputted of the electronic device is determined, the audio type of the audio to be outputted can be compared with the first output audio type and the second output audio type, to determine whether the audio type of the audio to be outputted matches the first output audio type and whether the audio type of the audio matches the second output audio type. When the determination result indicates that the audio type of the audio to be outputted matches the first output audio type, the first peripheral audio output device corresponding to the first output audio type may be determined as the target peripheral audio output device; and when the determination result indicates the audio type of the audio to be outputted matches the second output audio type, the second peripheral audio output device corresponding to the second output audio type may be determined as the target peripheral audio output device.

In block S450, in response to the audio type of the audio matched with the second output audio type, the second peripheral audio output device is determined as the target peripheral audio output device.

In block S460, the audio is outputted through the target peripheral audio output device.

Specifically, a specific detail of block S460 may refer to the above description of block S150, which will not be repeated herein.

Even still another embodiment of the present disclosure provides an audio output method, in which, a current connection state of the electronic device with peripheral audio output devices is detected; in response to the electronic device is detected as being connected to at least two peripheral audio output devices, an output audio type configured for each of the at least two peripheral audio output devices is acquired; in response to an audio is to be output, an audio type of the audio is acquired; in response to the audio type of the audio matches the first output audio type, the first peripheral audio output device is determined as a target peripheral audio output device; in response to the audio type of the audio matches the second output audio type, the second peripheral audio output device is determined as the target peripheral audio output device; and the audio is outputted through the target peripheral audio output device. Compared with the audio output method shown in FIG. 2, in this embodiment, an audio is outputted through a peripheral audio output device corresponding to an output audio type matching an audio type of the audio, thereby meeting configuration requirements of a user and improving experience of the user.

Referring to FIG. 7, FIG. 7 illustrates a module block diagram of an audio output apparatus 400 provided based on an embodiment of the present disclosure. The audio output apparatus 400 is implemented by the above-described electronic device, and will be described hereinafter with respect to the module block diagram shown in FIG. 7. The audio output apparatus 400 includes: a connection state detection module 410, an output audio type acquisition module 420, an audio type acquisition module 430, a target peripheral audio output device determination module 440, and an audio output module 450.

The connection state detection module 410 is used to detect a current connection state of the electronic device with peripheral audio output devices.

The output audio type acquisition module 420 is used to acquire an output audio type configured for each of the at least two peripheral audio output devices, in response to the electronic device is detected as being connected to at least two peripheral audio output devices.

Further, the output audio type acquisition module 420 may include a function configuration interface display submodule and a first output audio type acquisition submodule.

The function configuration interface display submodule is used to display a function configuration interface in response to the electronic device is detected as being connected to at least two peripheral audio output devices, where the function configuration interface is used to configure output audio types corresponding to the at least two peripheral audio output devices.

The first output audio type acquisition submodule is used to acquire a configuration operation on the function configuration interface, and acquire the output audio type configured for each of the at least two peripheral audio output devices based on the configuration operation.

Further, the output audio type acquisition module 420 may include a correspondence acquisition submodule and a second output audio type acquisition submodule.

The correspondence acquisition submodule is used to acquire a pre-configured correspondence between peripheral audio output device and output audio types acquired locally from the electronic device, in response to the electronic device is detected as being connected to at least two peripheral audio output devices.

The second output audio type acquisition submodule is used to acquire the output audio type configured for each of the at least two peripheral audio output devices based on the pre-configured correspondence.

The audio type acquisition module 430 is used to acquire an audio type of an audio, in response to the audio is to be output.

The target peripheral audio output device determination module 440 is used to determine a target peripheral audio output device from the at least two peripheral audio output devices based on the audio type of the audio and the output audio type configured for each of each of the at least two peripheral audio output devices.

Further, the at least two peripheral audio output devices may include a first peripheral audio output device and a second peripheral audio output device, the first peripheral audio output device is correspondingly configured with a first output audio type, the second peripheral audio output device is correspondingly configured with a second output audio type. The target peripheral audio output device determination module 440 may include a first target peripheral audio output device determination module and a second target peripheral audio output device determination module.

The first target peripheral audio output device determination module is used to determine the first peripheral audio output device as a target peripheral audio output device, in response to the audio type of the audio matches the first output audio type.

The second target peripheral audio output device determination module is used to determine the second peripheral audio output device as the target peripheral audio output device, in response to the audio type of the audio matches the second output audio type.

The audio output module 450 is used to output the audio through the target peripheral audio output device.

Further, the audio output apparatus 400 may further include a first audio output module.

The first audio output module is used to output the audio through one peripheral audio output device of the at least two peripheral audio output devices, in response to the electronic device is detected as being switched from being connected to the at least two peripheral audio output devices to being connected to the one peripheral audio output device of the at least two peripheral audio output devices.

Further, the audio output apparatus 400 may further include a target audio output apparatus determination module and a second audio output module.

The target audio output apparatus determination module is used to determine a target audio output apparatus from a speaker and an earpiece of the electronic device according the audio type of the audio, in response to the electronic device is detected as being switched from being connected to the at least two peripheral audio output devices to being not connected to any peripheral audio output device.

Further, the audio type of the audio may include a media audio type and a call audio type. The target audio output apparatus determination module may include a first target audio output apparatus determination submodule and a second target audio output apparatus determination submodule.

The first target audio output apparatus determination submodule is used to determine the speaker of the electronic device as the target audio output apparatus, in response to the audio type of the audio is the media audio type.

The second target audio output apparatus determination submodule is configured to determine the earpiece of the electronic device as the target audio output apparatus, in response to the audio type of the audio is the call audio type.

The second audio output module is configured to output the audio through the target audio output apparatus.

It will be apparent to those skilled in the art that, for the convenience and brevity of the description, the above described specific operation processes of the apparatus and modules can be referred to the corresponding processes in the preceding method embodiments, which will not be repeated herein.

In several embodiments provided based on the present disclosure, the modules are coupled to each other either electrically, mechanically or in other forms.

Further, the various function modules in the various embodiments of the present disclosure may be integrated in one single processing module, or the various modules may physically exist separately from each other, or two or more modules of the various modules may be integrated in one single module. The above integrated modules can be implemented either in the form of a hardware module or in the form of a software function module.

Referring to FIG. 8, FIG. 1 illustrates a structural block diagram of an electronic device 100 provided by an embodiment of the present disclosure. The electronic device 100 may be an electronic device capable of running an application, such as a smartphone, a tablet, an e-book, etc. The electronic device 100 of the present disclosure may include one or more of the following components: a processor 110, a memory 120, a touch screen 130, and one or more applications. Specifically, the one or more applications may be stored in the memory 120 and configured to be executed by the one or more processors 110, and the one or more applications are configured to cause to the processor 110 to implement the methods as described in the preceding method embodiments.

Specifically, the processor 110 may include one or more processing cores. The processor 110 utilizes various interfaces and circuits to connect various parts in the entire electronic device 100, and performs various functions and processes data of the electronic device 100 by running or executing instructions, programs, code sets, or instruction sets stored in the memory 120, and by calling data stored in the memory 120. Alternatively, the processor 110 may be implemented by at least one of a Digital Signal Processing (DSP), a Field-Programmable Gate Array (FPGA), a Programmable Logic Array (PLA). The processor 110 may integrate one or a combination of one or more of a Central Processing Unit (CPU), a Graphics Processing Unit (GPU) and a modem. Specifically, the CPU is mainly used to handle an operating system, a user interface, applications, etc. The GPU is used to render and draw a content to be displayed. The modem is used to handle wireless communication. It will be understood that the above modem can also be implemented through a separate communication chip, rather than being integrated into the processor 110.

The memory 120 may include a Random Access Memory (RAM), and may also include a Read-Only Memory (ROM). The memory 120 may be used to store instructions, programs, codes, code sets, or instruction sets. The memory 120 may include a region for storing programs and a region for storing data. The region for storing programs may store instructions for implementing an operating system, instructions for implementing at least one function (e.g., a touch function, a sound playback function, an image playback function, etc.), instructions for implementing each of the method embodiments described hereinafter, etc. The region for storing data may also store data (e.g. a phone book, an audio and video data, chat log data) created by the electronic device 100 in use.

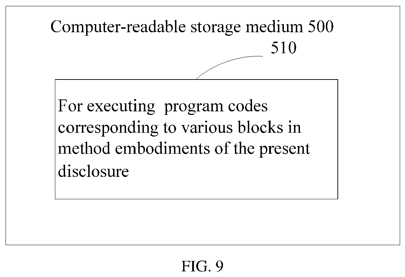

Reference to FIG. 9, FIG. 9 illustrates a structural block diagram of a computer-readable storage medium provided by an embodiment of the present disclosure. The computer-readable storage medium 500 has program codes stored therein, and the program codes are callable by a processor to implement the methods described in the method embodiments described above.

The computer-readable storage medium 500 may be an electronic memory such as a flash memory, an electrically erasable programmable read-only memory (EEPROM), an Erasable Programmable Read-only Memory (EPROM), a hard disk, or a Read Only Memory (ROM). Optionally, the computer-readable storage medium 500 includes a non-transitory computer-readable storage medium. The computer-readable storage medium 500 has a storage space for program codes 510 that implement any of the process blocks of the methods described above. The program code may be read from or written to one or more computer program products. For example, the program codes 510 may be compressed in an appropriate form.

In summary, the embodiments of the present disclosure provide an audio output method and an audio output apparatus, an electronic device and a storage medium, which includes: detecting a current connection state of the electronic device with peripheral audio output devices; in response to the electronic device is detected as being connected to at least two peripheral audio output devices, acquiring an output audio type configured for each of the at least two peripheral audio output devices; in response to an audio is to be output, acquiring an audio type of the audio; determining a target peripheral audio output device from the at least two peripheral audio output devices based on the audio type of the audio and the output audio type configured for each of the at least two peripheral audio output devices; and outputting the audio through the target peripheral audio output device. As such, the output audio type correspondingly configured for each peripheral audio output device is acquired in response to the electronic device is connected to the at least two peripheral audio output devices, and different types of audios are outputted through different peripheral audio output devices correspondingly, thereby improving flexibility of audio output.

Finally, it should be noted that the above embodiments are merely intended to illustrate the technical solutions of the present disclosure and not intended to limit thereto. Although the present disclosure is described in detail with reference to the preceding embodiments, it should be understood by those of ordinary skill in the art that it is still possible to modify the technical solutions recorded in the preceding embodiments or to replace some of the technical features with equivalent ones; and that these modifications or replacements do not drive the essence of the corresponding technical solutions away from the spirit and scope of the technical solutions of the various embodiments of the present disclosure.

## Claims

1. An audio output method, implemented by an electronic device, comprising:
detecting a current connection state of the electronic device with peripheral audio output devices;
acquiring, in response to the electronic device is detected as being connected to at least two peripheral audio output devices, an output audio type configured for each of the at least two peripheral audio output devices;
acquiring an audio type of an audio in response to the audio is to be outputted;
determining, based on the audio type of the audio and the output audio type configured for each of the at least two peripheral audio output devices, a target peripheral audio output device from the at least two peripheral audio output devices; and
outputting the audio through the target peripheral audio output device.

2. The method according to claim 1, wherein the acquiring, in response to the electronic device is detected as being connected to at least two peripheral audio output devices, an output audio type configured for each of the at least two peripheral audio output devices comprises:
displaying a function configuration interface in response to the electronic device is detected as being connected to at least two peripheral audio output devices, wherein the function configuration interface is configured to configure the output audio types corresponding to the at least two peripheral audio output devices respectively; and
acquiring a configuration operation on the function configuration interface, and acquiring, based on the configuration operation, the output audio type configured for each of the at least two peripheral audio output devices.

3. The method according to claim 2, wherein the displaying a function configuration interface in response to the electronic device is detected as being connected to at least two peripheral audio output devices comprises:
lightening a screen of the electronic device and displaying the function configuration interface in a pop-up window, in response to the electronic device is detected as being connected to at least two peripheral audio output devices and the electronic device is in a screen-off state.

4. The method according to claim 2, wherein displaying a function configuration interface in response to the electronic device is detected as being connected to at least two peripheral audio output devices comprises:
displaying the function configuration interface in a hover pop-up window on a current display interface of the electronic device or displaying the function configuration interface covering the current display interface of the electronic device, in response to the electronic device is detected as being connected to at least two peripheral audio output devices and the electronic device is in a screen-on state.

5. The method according to any one of claims 2 to 4, wherein the displaying a function configuration interface in response to the electronic device is detected as being connected to at least two peripheral audio output devices comprises:
displaying the at least two peripheral audio output devices and displaying an output audio type selection control at a corresponding position of each of the at least two peripheral audio output devices, in response to the electronic device is detected as being connected to at least two peripheral audio output devices, wherein the output audio type selection control is configured to select the output audio type of a corresponding one of the at least two peripheral audio output devices based on a selection operation.

6. The method according to any one of claims 2 to 4, wherein displaying a function configuration interface in response to the electronic device is detected as being connected to at least two peripheral audio output devices comprises:
displaying the at least two peripheral audio output devices and displaying an output audio type input box at a corresponding position of each of the at least two peripheral audio output devices, in response to the electronic device is detected as being connected to at least two peripheral audio output devices, wherein the output audio type input box is configured to determine the output audio type of a corresponding one of the at least two peripheral audio output devices based on an input content.

7. The method according to any one of claims 1 to 6, wherein the acquiring, in response to the electronic device is detected as being connected to at least two peripheral audio output devices, an output audio type configured for each of the at least two peripheral audio output devices comprises:
acquiring a pre-configured correspondence between peripheral audio output devices and output audio types locally from the electronic device, in response to the electronic device is detected as being connected to at least two peripheral audio output devices; and
acquiring, based on the correspondence, the output audio type configured for each of the at least two peripheral audio output devices.

8. The method according to any one of claims 1 to 6, wherein the acquiring, in response to the electronic device is detected as being connected to at least two peripheral audio output devices, an output audio type configured for each of at least two peripheral audio output devices comprises:
acquiring attribute information of each of the at least two peripheral audio output devices, in response to the electronic device is detected as being connected to at least two peripheral audio output devices; and
determining, based on the attribute information of each of the at least two peripheral audio output devices, the output audio type configured for each of the at least two peripheral audio output devices.

9. The method according to claim 8, wherein the attribute information comprises a propagation range of sound reduction and a propagation range of sound amplification.

10. The method according to any one of claims 1 to 6, wherein the acquiring, in response to the electronic device is detected as being connected to at least two peripheral audio output devices, an output audio type configured for each of at least two peripheral audio output devices comprises:
acquiring network quality of an environment in which the electronic device is located and a connection manner of the electronic device with each of the at least two peripheral audio output devices, in response to the electronic device is detected as being connected to at least two peripheral audio output devices; and
determining, based on the network quality of the environment in which the electronic device is located and the connection manner of the electronic device with each of the at least two peripheral audio output devices, the output audio type configured for each of the at least two peripheral audio output devices.

11. The method according to any one of claims 1 to 10, after outputting the audio through the target peripheral audio output device, further comprising:
outputting, in response to the electronic device is detected as being switched from being connected to the at least two peripheral audio output devices to being connected to one peripheral audio output device, the audio through the one peripheral audio output device.

12. The method according to any one of claims 1 to 10, after outputting the audio through the target peripheral audio output device, further comprising:
determining, based on the audio type of the audio, a target audio output apparatus from a speaker and an earpiece of the electronic device, in response to the electronic device is detected as being switched from being connected to the at least two peripheral audio output devices to being not connected to any peripheral audio output device; and
outputting the audio through the target audio output apparatus.

13. The method according to claim 12, wherein the audio type of the audio comprises one of a media audio type and a call audio type; and the determining, based on the audio type of the audio, a target audio output apparatus from a speaker and an earpiece of the electronic device comprises:
determining, in response to the audio type of the audio is the media audio type, the speaker of the electronic device as the target audio output apparatus;
determining, in response to the audio type of the audio is the call audio type, the earpiece of the electronic device as the target audio output apparatus.

14. The method according to any one of claims 1 to 13, wherein the at least two peripheral audio output devices comprise a first peripheral audio output device and a second peripheral audio output device; the first peripheral audio output device is correspondingly configured with a first output audio type and the second peripheral audio output device is correspondingly configured with a second output audio type; and the determining, based on the audio type of the audio and the output audio type configured for each of the at least two peripheral audio output devices, a target peripheral audio output device from the at least two peripheral audio output devices comprises:
determining, in response to the audio type of the audio matched with the first output audio type, the first peripheral audio output device as the target peripheral audio output device;
determining, in response to the audio type of the audio matched with the second output audio type, the second peripheral audio output device as the target peripheral audio output device.

15. The method according to claim 14, wherein the first peripheral audio output device comprises a wired peripheral audio output device, and the second peripheral audio output device comprises a BLUETOOTH^{®} peripheral audio output device.

16. The method according to any one of claims 1 to 15, before the acquiring an audio type of the audio in response to an audio is to be outputted, further comprising:
detecting an operation on a media audio playback typed software; and
determining, in response to a voice command or a touch operation for instructing the media audio playback typed software to perform audio playback is detected, the audio to be outputted exists.

17. The method according to any one of claims 1 to15, wherein the acquiring an audio type of the audio in response to an audio is to be outputted comprises:
acquiring, in response to the audio is to be outputted, a source of the audio; and
acquiring, based on the source of the audio, the audio type of the audio.

18. An audio output apparatus, implemented by an electronic device, comprising:
a connection state detection module, configured to detect a current connection state of the electronic device with peripheral audio output devices;
an output audio type acquisition module, configured to acquire, in response to the electronic device is detected as being connected to at least two peripheral audio output devices, an output audio type configured for each of the at least two peripheral audio output devices;
an audio type acquisition module, configured to acquire an audio type of the audio in response to the audio is to be outputted;
a target peripheral audio output device determination module, configured to determine, based on the audio type of the audio and the output audio type configured for each of the at least two peripheral audio output devices, a target peripheral audio output device from the at least two peripheral audio output devices; and
an audio output module, configured to output the audio through the target peripheral audio output device.

19. An electronic device, comprising a memory and a processor; wherein the memory is coupled to the processor, the memory is stored with instructions, and the instructions are configured to cause, when being executed by the processor, the processor to implement the method according to any one of claims 1 to 17.

20. A computer-readable storage medium having program codes stored therein, and the program codes are callable by a processor to implement the method according to any one of claims 1 to 17.
